# EUROPÄISCHE PATENTSCHRIFT

(11) **EP 1 157 805 B1**
(45) Veröffentlichungstag und Bekanntmachung des Hinweises auf die Patenterteilung: **12.02.2003**
(21) Anmeldenummer: 00110806.7
(22) Anmeldetag: 22.05.2000
(51) Int. Cl.: B29C 47/90

(54) **Kalibrierhülse für ein extrudiertes Kunststoffrohr**
Calibrating sleeve for extruded plastic tube
Manchon de calibrage pour un tuyau extrudé

(43) Veröffentlichungstag der Anmeldung: 28.11.2001
(73) Patentinhaber: K. Sandern Maschinenbau GmbH, 49744 Geeste / Dalum (DE)
(72) Erfinder: Sandern, Klaus, 49744 Geeste (DE)
(74) Vertreter: Rohmann, Michael, Dr.

(56) Entgegenhaltungen:
- EP-A- 0 670 212
- DE-A- 3 521 321
- DE-A- 19 843 340
- DE-U- 20 000 872
- US-A- 3 958 913
- US-A- 5 891 481

## Beschreibung

Die Erfindung betrifft eine Kalibrierhülse für ein extrudiertes Kunststoffrohr mit einem rohrförmigen Basisteil und einem Eintrittsende und einem Austrittsende, wobei der Innendurchmesser des rohrförmigen Basisteils veränderbar ist. - Ein aus einem Extruder austretendes extrudiertes Kunststoffrohr im plastifizierten Zustand unterliegt je nach Art des Kunststoffes und der im Extruder gefahrenen Temperatur einer mehr oder weniger starken Schrumpfung. Kalibrierhülsen der vorstehend genannten Art dienen dazu, ein extrudiertes Kunststoffrohr im plastifizierten Zustand von einem Extruder zu übernehmen und unter Berücksichtigung der Nachschrumpfung genau zu kalibrieren und bis zu einer bestimmten Festigkeit abzukühlen. Dabei ist es notwendig, dass der Innendurchmesser der Kalibrierhülse während des Betriebes möglichst exakt einstellbar ist. Die Kalibrierhülse wird im Übrigen in der Regel an der Stirnseite eines Wasserbades vorgesehen. Zur Stabilisierung des noch plastifizierten Kunststoffrohres wird normalerweise mit einem Unterdruck gearbeitet.

Bei einer aus der Praxis bekannten Kalibrierhülse der eingangs genannten Art, beispielsweise aus der US-A-5 891 481, sind senkrecht zur Längsrichtung des rohrförmigen Basisteils Querschlitze in die Basisteilwandung eingebracht. Um den Innendurchmesser des rohrförmigen Basisteils einzustellen, müssen die einzelnen Ringabschnitte zwischen den Querschlitzen einzeln manipuliert werden. Dies ist relativ aufwendig.

Demgegenüber liegt der Erfindung das technische Problem zugrunde, eine Kalibrierhülse der eingangs genannten Art anzugeben, bei der der Innendurchmesser auf einfache und wenig aufwendige Weise präzise einstellbar ist.

Zur Lösung dieses technischen Problems lehrt die Erfindung eine Kalibrierhülse der eingangs genannten Art, welche dadurch gekennzeichnet ist, dass das rohrförmige Basisteil in seiner Basisteilwandung zumindest einen sich in Längsrichtung des Basisteils erstreckenden Längsschlitz aufweist,

dass eine erste Manipuliereinrichtung vorgesehen ist, mit welcher in einem ersten Manipulierringbereich durch Einwirkung auf die Außenoberfläche des Basisteils der Innendurchmesser des Basisteils veränderbar ist

und dass zumindest eine zweite Manipuliereinrichtung vorgesehen ist, mit welcher in zumindest einem zweiten Manipulierringbereich durch Einwirkung auf die Außenoberfläche des Basisteils der Innendurchmesser des Basisteils veränderbar ist. - Eintrittsende meint im Rahmen der Erfindung das Ende Kalibrierhülse, an dem das aus dem Extruder austretende extrudierte Kunststoffrohr von der Kalibrierhülse aufgenommen wird. Austrittsende meint das Ende der Kalibrierhülse, an dem das Kunststoffrohr die Kalibrierhülse wieder verlässt. Das rohrförmige Basisteil der Kalibrierhülse besteht zweckmäßigerweise aus einem Metall. Es liegt im Rahmen der Erfindung, dass das rohrförmige Basisteil in Längsrichtung bzw. Axialrichtung einstückig ausgeführt ist. - Dass mit einer Manipuliereinrichtung auf die Außenoberfläche des Basisteils eingewirkt wird, meint im Rahmen der Erfindung insbesondere, dass in dem betreffenden Manipulierringbereich über den gesamten Außenumfang des rohrförmigen Basisteils gleichzeitig auf die Außenoberfläche eingewirkt wird.

Der Erfindung liegt zunächst die Erkenntnis zugrunde, dass die durch den Längsschlitz bzw. durch die Längsschlitze getrennten Segmente des rohrförmigen Basisteils gleichsam federnd radial verstellt werden können und mit Hilfe einer Manipuliereinrichtung unter Vorspannung gesetzt werden können. Dadurch, dass diese Segmente bzw. die Basisteilwandung unter Vorspannung gesetzt werden können, lässt sich der Innendurchmesser des Basisteils verändern. Bei einem erfindungsgemäßen Längsschlitz handelt es sich zweckmäßigerweise um einen durchgehenden Längsschlitz, bei dem keine Unterbrechungen durch Basisteilwandungsabschnitte vorhanden sind. Der Längsschlitz erstreckt sich zumindest über einen Teil der Länge des Basisteils. Vorzugsweise erstreckt sich der Längsschlitz über zumindest 75 %, bevorzugt über zumindest 80 %, sehr bevorzugt über zumindest 85 % der Länge des Basisteils. Es liegt im Rahmen der Erfindung, dass der Längsschlitz am Austrittsende der Kalibrierhülse beginnt bzw. am Austrittsende der Kalibrierhülse mündet.

Nach sehr bevorzugter Ausführungsform der Erfindung ist der zumindest eine Längsschlitz wellenförmig ausgebildet. Mit anderen Worten weist nach dieser Ausführungsform der Längsschlitz Wellenberge und Wellentäler bzw. Maxima und Minima auf. Dabei kann es sich um abgerundete Wellenberge und Wellentäler handeln. Nach einer Ausführungsform der Erfindung weist der zumindest eine Längsschlitz spitze Wellenberge und Wellentäler auf. Bei dieser letztgenannten Ausführungsform hat der Längsschlitz also eine "Zick-Zack-Form". Es liegt im Rahmen der Erfindung, dass ein erfindungsgemäßer Längsschlitz zumindest zwei Wellenberge und zumindest zwei Wellentäler aufweist, vorzugsweise mehr als zwei Wellenberge und mehr als zwei Wellentäler aufweist. Es liegt fernerhin im Rahmen der Erfindung, dass die Wellenberge und Wellentäler des Längsschlitzes die gleiche Amplitude aufweisen. Nach bevorzugter Ausführungsform der Erfindung ist mehr als ein Längsschlitz in dem rohrförmigen Basisteil vorgesehen und nach sehr bevorzugter Ausführungsform der Erfindung sind mehr als zwei Längsschlitze in dem rohrförmigen Basisteil ausgebildet. Die mehreren Längsschlitze verlaufen bei den vorgenannten Ausführungsformen zweckmäßigerweise parallel zueinander. Vorzugsweise ist die Amplitude der Wellenberge und Wellentäler sowie der Abstand benachbarter Längsschlitze mit der Maßgabe ausgelegt, dass eine von der Spitze eines Wellenberges eines ersten Längsschlitzes ausgehende gedachte Linie, die parallel zur Längsachse des rohrförmigen Basisteils verläuft, das Wellental eines benachbarten Längsschlitzes schneidet. Mit anderen Worten findet bezüglich der Längsrichtung des rohrförmigen Basisteils gleichsam eine Überlappung von Wellenbergen und Wellentälern benachbarter Längsschlitze statt.

Nach sehr bevorzugter Ausführungsform der Erfindung nimmt die Schlitzbreite des Längsschlitzes im jungfräulichen Zustand des Basisteils vom Eintrittsende zum Austrittsende hin zu. Jungfräulicher Zustand des Basisteils meint den Zustand des Basisteils ohne Einwirkung einer Manipuliereinrichtung auf das Basisteil, d. h. ohne irgendeine Veränderung des Innendurchmessers. Jungfräulicher Zustand des Basisteils meint vorzugsweise den ursprünglichen Zustand des Basisteils nach seiner Herstellung. - Es liegt im Rahmen der Erfindung, dass bei Einstellung des jeweils minimalen Innendurchmessers des Basisteils in den Manipulierringbereichen die Schlitzbreite des Längsschlitzes über die gesamte Länge des Längsschlitzes konstant oder zumindest im Wesentlichen konstant ist. Zweckmäßigerweise ist diese kleinste Schlitzbreite so ausgelegt, dass noch eine funktionssichere Wasserkühlung und Wasserschmierung möglich ist.

Nach einer Ausführungsform der Erfindung ist im jungfräulichen Zustand des Basisteils der Innendurchmesser des Basisteils am Eintrittsende geringer als am Austrittsende. Gemäß einer Ausführungsform der Erfindung ist im jungfräulichen Zustand des Basisteils ein Innendurchmesser im bezüglich der Längserstreckung des Basisteils mittleren Bereich des Basisteils geringer als der Innendurchmesser am Austrittsende. Zweckmäßigerweise handelt es sich bei dem mittleren Bereich um das mittlere Drittel, bevorzugt um das mittlere Fünftel des Basisteils in Bezug auf die Längserstreckung des Basisteils. Vorzugsweise nimmt im jungfräulichen Zustand des Basisteils der Innendurchmesser vom Eintrittsende zu dem genannten mittleren Bereich hin zu und nimmt der Innendurchmesser vom mittleren Bereich zum Austrittsende hin zu. Dabei handelt es sich zweckmäßigerweise um kontinuierliche konusartige Innendurchmesservergrößerungen. Nach einer bevorzugten Ausführungsform der Erfindung ist das Ausmaß der Innendurchmesservergrößerung vom mittleren Bereich zum Austrittsende größer als vom Eintrittsende zum mittleren Bereich.

Die Wandstärke der Basisteilwandung wird aufgrund der besseren Wärmeleitfähigkeit zweckmäßigerweise möglichst gering ausgelegt. Es liegt im Rahmen der Erfindung, dass sich die Wandstärke der Basisteilwandung in Längsrichtung des rohrförmigen Basisteils verändert. Die Wandstärken sind dabei zweckmäßigerweise so eingerichtet, dass die Innendurchmesser in den beiden Manipulierringbereichen möglichst unabhängig voneinander einstellbar sind. Es liegt somit im Rahmen der Erfindung, durch eine Verringerung der Wandstärke der Basisteilwandung eine definierte Biegezone für die Basisteilwandung einzurichten, so dass bei einer Innendurchmesserveränderung eine gewünschte Biegung der Basisteilwandung in dieser Biegezone stattfinden kann. Nach einer Ausführungsform der Erfindung ist die Wandstärke der Basisteilwandung in dem bezüglich der Längserstreckung des Basisteils mittleren Bereich des Basisteils am geringsten.

Nach sehr bevorzugter Ausführungsform, der im Rahmen der Erfindung ganz besondere Bedeutung zukommt, ist eine Manipuliereinrichtung und ein Manipulierringbereich im bezüglich der Längserstreckung des Basisteils mittleren Bereich des Basisteils angeordnet. Bei diesem mittleren Bereich des Basisteils handelt es sich in Bezug auf die Länge des Basisteils vorzugsweise um das mittlere Drittel des Basisteils, bevorzugt um das mittlere Fünftel des Basisteils. Es liegt im Rahmen der Erfindung, dass eine erste Manipuliereinrichtung und ein erster Manipulierringbereich im bezüglich der Längserstreckung des Basisteils mittleren Bereich des Basisteils angeordnet ist und eine zweite Manipuliereinrichtung und ein zweiter Manipulierringbereich am Austrittsende des Basisteils angeordnet ist.

Eine bevorzugte Ausführungsform der Erfindung ist dadurch gekennzeichnet, dass in zumindest einem Manipulierringbereich die Außenoberfläche des Basisteils eine konusförmige Manipulieraußenfläche aufweist. Diese konusförmige Manipulieraußenfläche ragt vorzugsweise aus der Außenoberfläche des Basisteils hervor. Zweckmäßigerweise verläuft die konusförmige Manipulieraußenfläche über den gesamten Außenumfang der Basisteilwandung, abgesehen von den Bereichen, die von dem Längsschlitz oder von den Längsschlitzen durchsetzt sind. Es liegt im Rahmen der Erfindung, dass die konusförmige Manipulieraußenfläche einem sich zum Austrittsende der Kalibrierhülse verjüngenden Konus entspricht. Durch Einwirkung auf die konusförmige Manipulieraußenfläche ist eine erfindungsgemäße Veränderung des Innendurchmessers des Basisteils möglich. Dazu ist zweckmäßigerweise ein das Basisteil umfassender Manipulierring vorgesehen und durch Verschiebung dieses Manipulierringes in Längsrichtung des Basisteils und durch Wechselwirkung des Manipulierringes mit der konusförmigen Manipulieraußenfläche kann der Innendurchmesser des Basisteils verändert werden. Nach einer bevorzugten Ausführungsform der Erfindung ist in einem Manipulierringbereich ein das Basisteil umfassender Manipulierring mit einer konusförmigen Manipulierinnenfläche angeordnet und ist durch Verschiebung des Manipulierringes in Längsrichtung des Basisteils und durch Wechselwirkung der konusförmigen Manipulieraußenfläche mit der konusförmigen Manipulierinnenfläche der Innendurchmesser des Basisteils veränderbar. Vorzugsweise weist die erfindungsgemäße Kalibrierhülse zumindest zwei gemäß den vorstehend erläuterten Ausführungsformen ausgestaltete Manipulierringbereiche auf. Ein erfindungsgemäßer Manipulierring ist vorzugsweise mit Hilfe einer Spindel in Längsrichtung des Basisteils bewegbar, welche Spindel in dem Manipulierring geführt ist.

Nach einer weiteren sehr bevorzugten Ausführungsform der Erfindung wird eine Veränderung des Innendurchmessers des Basisteils durch Drehen eines Manipulierringes um das Basisteil und durch die dabei stattfindende Wechselwirkung des Manipulierringes mit der Außenoberfläche des Basisteils erreicht. Vorzugsweise weist hierzu die Außenoberfläche des Basisteils in zumindest einem Manipulierringbereich über den Außenumfang des Basisteils verteilte und aus der Außenoberfläche vorkragende Manipulierzähne auf und ist durch Einwirkung auf die Manipulierzähne der Innendurchmesser des Basisteils veränderbar. Es liegt somit im Rahmen der Erfindung, dass gleichsam ein Ring von Manipulierzähnen auf der Außenoberfläche des Basisteils vorgesehen ist. Vorzugsweise weisen die Manipulierzähne in Umfangsrichtung des Basisteils abgeschrägte Manipulierflächen auf. Zweckmäßigerweise sind alle Manipulierflächen in die gleiche Richtung abgeschrägt. Nach bevorzugter Ausführungsform ist in dem Manipulierringbereich ein das Basisteil umfassender Manipulierring angeordnet und ist beim Drehen des Manipulierringes durch Wechselwirkung der Innenumfangsfläche des Manipulierringes mit den Manipulierzähnen der Innendurchmesser des Basisteils veränderbar. Der Manipulierring wird dabei um das Basisteil gedreht. Vorzugsweise weist die Innenumfangsfläche des Manipulierringes Manipulierausnehmungen für den Eingriff der Manipulierzähne auf. Die Manipulierausnehmungen weisen dabei ebenfalls abgeschrägte Manipulierflächen auf, die den abgeschrägten Manipulierflächen der Manipulierzähne zugeordnet sind.

Der Erfindung liegt die Erkenntnis zugrunde, dass bei der erfindungsgemäßen Kalibrierhülse der Innendurchmesser der Hülse auf sehr einfache und problemlose Weise einstellbar ist und zwar unter Berücksichtigung der Schrumpfung des extrudierten plastifizierten Kunststoffrohres. Mit der Kalibrierhülse ist eine optimale Kalibrierung und auch Kühlung des Kunststoffrohres möglich und der gewünschte Durchmesser des Kunststoffrohres kann präzise und einfach eingestellt werden. In den zwei oder mehr erfindungsgemäßen Manipulierringbereichen kann der Innendurchmesser des Basisteils jeweils weitgehend unabhängig von dem Innendurchmesser der übrigen Manipulierringbereiche eingestellt werden. Von besonderem Vorteil ist, dass bei der erfindungsgemäßen Kalibrierhülse eine stufenlose Einstellung des Innendurchmessers möglich ist. Es liegt im Rahmen der Erfindung, dass nach Bestätigung einer Manipuliereinrichtung in einem Manipulierringbereich die Basisteilwandung unter Vorspannung gesetzt ist und gleichsam federnd an der Manipuliereinrichtung bzw. an dem Manipulierring anliegt. Dies hat den beachtlichen Vorteil, dass die Segmente der Basisteilwandung nicht unkontrolliert auf das noch plastische Kunststoffrohr einwirken. Dadurch ist es u. a. möglich, die Kalibrierung bei nur geringem Unterdruck durchzuführen und dadurch wird die Reibung zwischen Kunststoffrohr und Basisteilwandung relativ gering gehalten und hohe Abzugskräfte am noch plastischen Kunststoffrohr werden somit vermieden. Bei vielen aus dem Stand der Technik bekannten Kalibrierhülsen wirken dagegen relativ hohe Abzugskräfte auf das noch warme Kunstoffrohr ein und daraus resultiert in der Regel eine unkontrollierte Dehnung des Kunststoffrohres und somit eine unkontrollierte Veränderung der Wandstärke des Kunststoffrohres. Bei der erfindungsgemäßen Kalibrierhülse kann im Übrigen durch die exakte Innendurchmessereinstellung der mit der Zeit auftretende Verschleiß der Kalibrierhülse auch gleichsam nachgestellt werden. Auf diese Weise kann die Einsatzdauer der erfindungsgemäßen Kalibrierhülse gegenüber bekannten Kalibrierhülsen verlängert werden.

Nachfolgend wird die Erfindung anhand einer lediglich ein Ausführungsbeispiel darstellenden Zeichnung näher erläutert. Es zeigen in schematischer Darstellung:
- Fig. 1: einen Längsschnitt durch ein rohrförmiges Basisteil einer erfindungsgemäßen Kalibrierhülse im jungfräulichen Zustand,
- Fig. 2: einen Längsschnitt durch eine erfindungsgemäße Kalibrierhülse mit Manipuliereinrichtungen,
- Fig. 3: eine Seitenansicht des Gegenstandes nach Fig. 2,
- Fig. 4: der Ausschnitt A aus Fig. 3 in vergrößertem Maßstab,
- Fig. 5: eine Seitenansicht einer erfindungsgemäßen Kalibrierhülse in einer anderen Ausführungsform und
- Fig. 6: einen Schnitt B-B durch den Gegenstand nach Fig. 5.

Die Figuren betreffen eine Kalibrierhülse für ein nicht dargestelltes extrudiertes Kunststoffrohr. Die Kalibrierhülse weist ein rohrförmiges Basisteil 1 auf und hat ein Eintrittsende 2 sowie ein Austrittsende 3. Erfindungsgemäß ist der Innendurchmesser des rohrförmigen Basisteils 1 veränderbar.

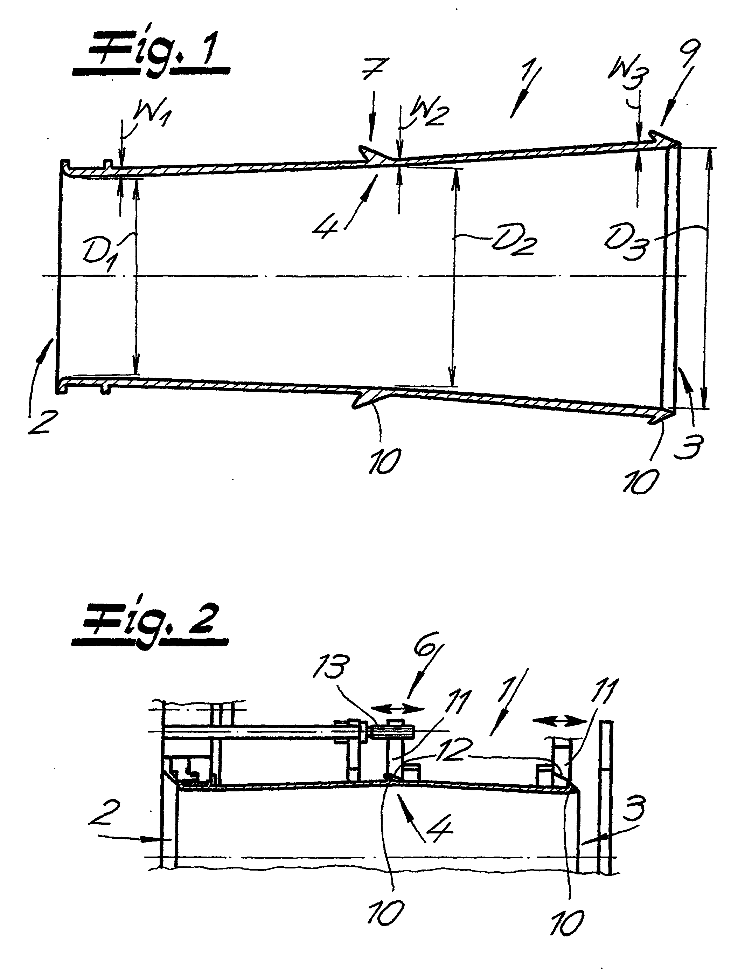

Fig. 1 zeigt das rohrförmige Basisteil 1 im jungfräulichen Zustand, d. h. in einem Zustand ohne Einwirkung von Manipuliereinrichtungen 6, 8 und ohne Veränderung des Innendurchmessers gegenüber dem ursprünglichen Zustand des Basisteils 1. In Fig. 1 ist erkennbar, dass der Innendurchmesser D₁ des Basisteils 1 am Eintrittsende 2 geringer ist als der Innendurchmesser D₃ des Basisteils 1 am Austrittsende 3. Fernerhin ist der Innendurchmesser D₁ am Eintrittsende 2 geringer als der Innendurchmesser D₂ im bezüglich der Längserstreckung des Basisteils 1 mittleren Bereich 4 des Basisteils 1. Somit nimmt im jungfräulichen Zustand des Basisteils 1 der Innendurchmesser vom Eintrittsende 2 zum Austrittsende 3 hin kontinuierlich zu. Im Ausführungsbeispiel ist dabei das Ausmaß der Innendurchmesservergrößerung vom Eintrittsende 2 zum mittleren Bereich 4 hin geringer als das Ausmaß der Innendurchmesservergrößerung vom mittleren Bereich 4 zum Austrittsende 3 hin. In der Fig. 1 ist weiterhin erkennbar, dass die Wandstärke W₂ im mittleren Bereich 4 geringer ist als die Wandstärke W₁ am Eintrittsende 2 und die Wandstärke W₃ am Austrittsende 3.

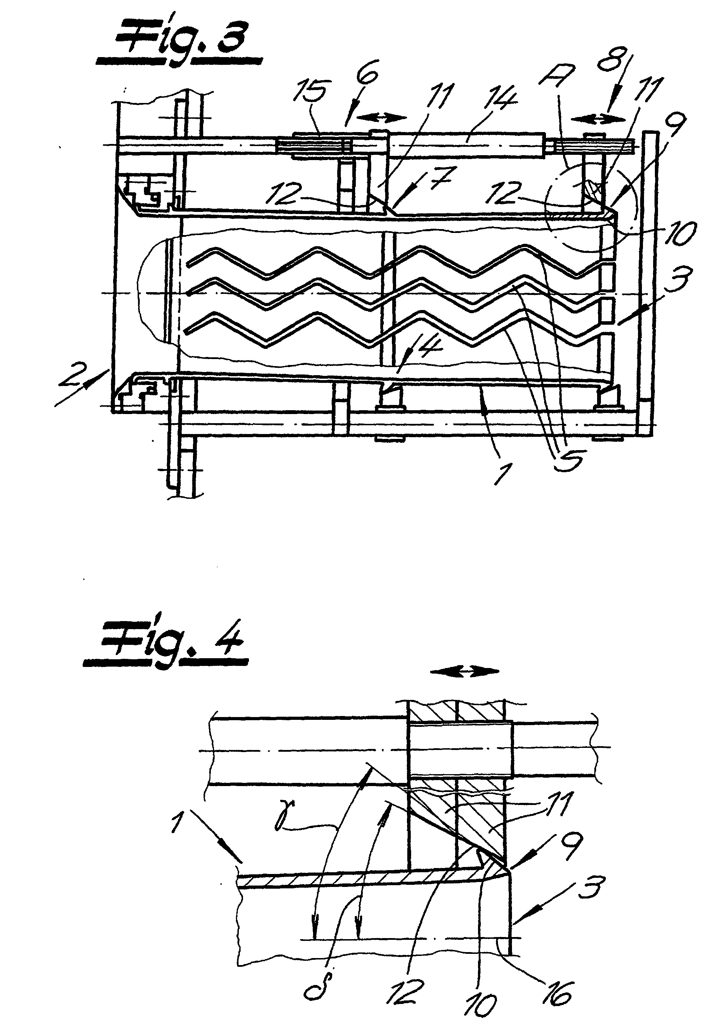

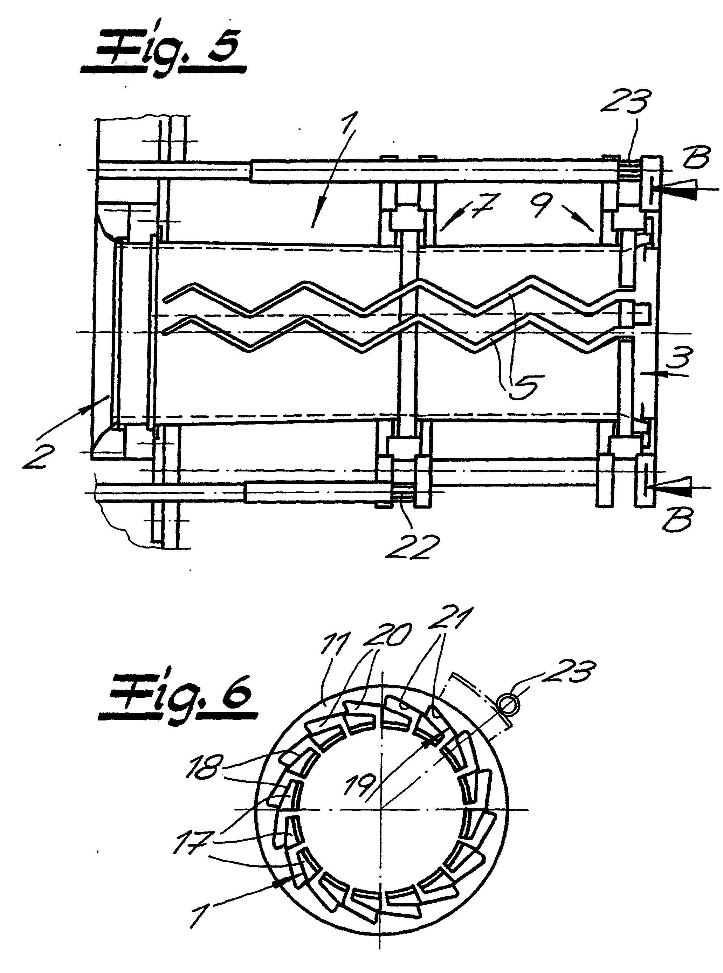

Erfindungsgemäß weist das rohrförmige Basisteil 1 in seiner Basisteilwandung zumindest einen sich in Längsrichtung des Basisteils 1 erstreckenden Längsschlitz 5 (Fig. 3, Fig. 5) auf. Zweckmäßigerweise und im Ausführungsbeispiel sind mehrere Längsschlitze 5 in dem Basisteil 1 vorgesehen. Im Ausführungsbeispiel nach den Fig. 3 und 5 sind die Längsschlitze 5 zick-zack-förmig ausgebildet. Die Längsschlitze 5 beginnen im Ausführungsbeispiel nach den Figuren am Austrittsende 3 und erstrecken sich über mehr als 90 % der Länge des Basisteils 1. Die in Fig. 3 dargestellten Schlitzbreiten der Längsschlitze 5 dienen der Veranschaulichung und entsprechen nicht dem tatsächlichen Zustand des rohrförmigen Basisteils 1 in Fig. 3. Die beiden unteren Längsschlitze 5 in der Fig. 3 zeigen die Schlitzbreite der Längsschlitze 5, wenn an allen Stellen des Basisteils 1 der größte Innendurchmesser eingestellt ist. Dann nimmt die Schlitzbreite eines Längsschlitzes 5 vom Eintrittsende 2 zum Austrittsende 3 hin zu. Der obere Längsschlitz 5 in Fig. 3 zeigt dagegen den Zustand, in dem an allen Stellen der kleinste Innendurchmesser des Basisteils 1 eingestellt ist. In diesem Zustand weist der Längsschlitz 5 über seine gesamte Länge die gleiche Schlitzbreite auf. In den Fig. 3 und 5 ist im Übrigen erkennbar, dass die in der Basisteilwandung vorgesehenen Längsschlitze 5 parallel zueinander bzw. wegen der Aufweitung der Längsschlitze 5 zum Austrittsende 3 hin zumindest im Wesentlichen parallel zueinander verlaufen. Vorzugsweise und im Ausführungsbeispiel ist die Amplitude der Wellenberge und Wellentäler der zick-zack-förmigen Längsschlitze 5 sowie der Abstand benachbarter Längsschlitze 5 mit der Maßgabe ausgelegt, dass eine von der Spitze eines Wellenberges eines ersten Längsschlitzes 5 ausgehende gedachte Linie, die parallel zur Längsachse des Basisteils 1 verläuft, das Wellental eines benachbarten Längsschlitzes 5 schneidet. Dies ist in der Fig. 5 durch eine gestrichelte Linie verdeutlicht worden. Vorzugsweise ist eine Mehrzahl von Längsschlitzen 5 mit gleichem Abstand zueinander über den gesamten Umfang des Basisteils 1 verteilt angeordnet.

Erfindungsgemäß ist eine erste Manipuliereinrichtung 6 vorgesehen, mit welcher in einem ersten Manipulierringbereich 7 durch Einwirkung auf die Außenoberfläche des Basisteils 1 der Innendurchmesser des Basisteils 1 veränderbar ist. Fernerhin ist im Ausführungsbeispiel nach den Figuren eine zweite Manipuliereinrichtung 8 vorgesehen, mit welcher in einem zweiten Manipulierringbereich 9 durch Einwirkung auf die Außenoberfläche des Basisteils 1 der Innendurchmesser des Basisteils 1 veränderbar ist. Die Fig. 1 bis 4 zeigen eine erste Ausführungsform der erfindungsgemäßen Kalibrierhülse, bei der sowohl in dem ersten Manipulierringbereich 7 als auch in dem zweiten Manipulierringbereich 9 die Außenoberfläche des Basisteils 1 jeweils eine konusförmige Manipulieraußenfläche 10 aufweist. Sowohl in dem ersten Manipulierringbereich 7 als auch in dem zweiten Manipulierringbereich 9 ist jeweils ein das Basisteil 1 umfassender Manipulierring 11 angeordnet, der eine konusförmige Manipulierinnenfläche 12 aufweist. Durch Verschiebung der Manipulierringe 11 in Längsrichtung des Basisteils 1 und durch jeweilige Wechselwirkung der konusförmigen Manipulieraußenfläche 10 mit der konusförmigen Manipulierinnenfläche 12 ist der Innendurchmesser des Basisteils 1 veränderbar. Insbesondere in Fig. 1 ist erkennbar, dass die konusförmige Manipulieraußenfläche 10 aus der Außenoberfläche des Basisteils 1 jeweils vorkragt. Die Ausrichtung der beiden konusförmigen Manipulieraußenflächen 10 entspricht in beiden Manipulierringbereichen 7, 9 einem sich zum Austrittsende 3 verjüngenden Konus. Eine durch Pfeile angedeutete Verschiebung der Manipulierringe 11 in Längsrichtung des Basisteils 1 führt zu einer Veränderung des Innendurchmessers des Basisteils 1. Wenn die Manipulierringe 11 nach Fig. 2 oder Fig. 3 nach links bewegt werden, resultiert aufgrund der Wechselwirkung der konusförmigen Manipulieraußenfläche 10 mit der konusförmigen Manipulierinnenfläche 12 des jeweiligen Manipulierringes 11 eine Reduzierung des Innendurchmessers. Die durch Längsschlitze 5 unterteilten Segmente der Basisteilwandung werden durch diese Wechselwirkung gleichsam unter Vorspannung gesetzt und liegen über die konusförmige Manipulieraußenfläche 10 gleichsam federnd an den Manipulierringen 11 an. Wenn die Manipulierringe 11 in den Fig. 2 und 3 nach rechts bewegt werden, resultiert eine Vergrößerung des Innendurchmessers des Basisteils 1.

Die Verschiebung des Manipulierringes 11 in dem ersten Manipulierringbereich 7 in Längsrichtung des Basisteils 1 wird im Ausführungsbeispiel nach Fig. 2 mit Hilfe einer Gewindespindel 13 bewirkt. Dabei erfolgt die Verstellung dieses Manipulierringes 11 zweckmäßigerweise mit einem nicht dargestellten Handrad mit Skalierung über ein ebenfalls nicht dargestelltes selbsthemmendes Schneckengetriebe. Die Gewindespindel 13 ist in dem Manipulierring 11 des ersten Manipulierringbereiches 7 geführt und eine Verdrehung der Gewindespindel 13 führt zu einer Verschiebung des Manipulierringes 11 in Längsrichtung des Basisteils 1. - Bei der Ausführungsform nach den Fig. 1 bis 4 ist weiterhin eine Spindel 14 an dem Manipulierring 11 des ersten Manipulierringbereiches 7 befestigt sowie mit dem Manipulierring 11 des zweiten Manipulierringbereiches 9 verbunden. Wenn der Manipulierring 11 des ersten Manipulierringbereiches 7 über die Gewindespindel 13 in Längsrichtung des Basisteils 1 verschoben wird, so findet aufgrund der festen Verbindung mit der Spindel 14 eine gleichzeitige Verschiebung des Manipulierringes 11 in dem zweiten Manipulierringbereich 9 statt. Dadurch werden also gleichzeitig der Innendurchmesser D₂ im mittleren Bereich 4 und der Innendurchmesser D₃ am Austrittsende 3 verändert. Die seitliche-Verschiebung der Spindel 14 wird in der in Fig. 3 dargestellten Muffe 15 mit Vielkeilwelle aufgenommen. Es liegt auch im Rahmen der Erfindung, dass die Spindel 14 einzeln bzw. separat mittels eines nicht dargestellten Handrades und eines ebenfalls nicht dargestellten Schneckengetriebes gedreht werden kann und auf diese Weise der Manipulierring 11 des zweiten Manipulierringbereiches 9, durch welchen die Spindel 14 geführt ist, separat in Längsrichtung des Basisteils 1 verschoben wird. Dabei kann also der Manipulierring 11 des zweiten Manipulierringbereiches 9 unabhängig von dem Manipulierring 11 des ersten Manipulierringbereiches 7 bewegt werden und es resultiert lediglich eine Veränderung des Innendurchmessers D₃ am Austrittsende 3.

In der Fig. 4 ist erkennbar, dass eine konusförmige Manipulieraußenfläche 10 einen Winkel γ mit der Längsachse 16 des Basisteils 1 bildet. Fernerhin bildet die zugeordnete konusförmige Manipulierinnenfläche 12 des Manipulierringes 11 mit der Längsachse 16 des Basisteils 1 einen Winkel δ. Je nach dem eingestellten Innendurchmesser des Basisteils 1 verändert sich der Winkel γ. Erfindungsgemäß ist die Kalibrierhülse so ausgelegt, dass der Winkel γ grundsätzlich größer ist als der Winkel δ.

In den Fig. 5 und 6 wird eine andere Ausführungsform der erfindungsgemäßen Kalibrierhülse dargestellt. Nach dieser Ausführungsform weist die Außenoberfläche des Basisteils 1 sowohl in dem ersten Manipulierringbereich 7 als auch in dem zweiten Manipulierringbereich 9 über den Außenumfang des Basisteils 1 verteilte und aus der Außenoberfläche vorkragende Manipulierzähne 17 auf. Im ersten Manipulierringbereich 7 und auch im zweiten Manipulierringbereich 9 ist somit ein Ring von Manipulierzähnen 17 auf der Außenoberfläche des Basisteils 1 vorgesehen. Vorzugsweise und im Ausführungsbeispiel nach den Fig. 5 und 6 weisen die Manipulierzähne 17 in Umfangsrichtung des Basisteils 1 abgeschrägte Manipulierzahnflächen 18 auf.

Zweckmäßigerweise und im Ausführungsbeispiel sind die Manipulierzähne 17 alle in die gleiche Richtung abgeschrägt. Sowohl in dem ersten Manipulierringbereich 7 als auch in dem zweiten Manipulierringbereich 9 ist im Ausführungsbeispiel nach den Fig. 5 und 6 jeweils ein das Basisteil 1 umfassender Manipulierring 11 angeordnet und beim Drehen eines Manipulierringes 11 ist durch Wechselwirkung der Innenumfangsfläche 19 des Manipulierringes 11 mit den Manipulierzähnen 17 der Innendurchmesser des Basisteils 1 veränderbar. Der Manipulierring 11 wird dabei also um das Basisteil 1 gedreht. Die Innenumfangsfläche 19 des Manipulierringes 11 ist vorzugsweise und im Ausführungsbeispiel (Fig. 6) mit Manipulierausnehmungen 20 für den Eingriff der Manipulierzähne 17 ausgestattet. Die Manipulierausnehmungen 20 weisen zweckmäßigerweise und im Ausführungsbeispiel abgeschrägte Manipulierausnehmungsflächen 21 auf, die im Ausführungsbeispiel (Fig. 6) alle in die gleiche Richtung abgeschrägt sind. Die Manipulierausnehmungen 20 sind vorzugsweise komplementär zu den Manipulierzähnen 17 ausgebildet. Zweckmäßigerweise entspricht die Anzahl der Manipulierzähne 17 der Anzahl der Manipulierausnehmungen 20 und entspricht die Abschrägung der Manipulierzahnflächen 18 der Abschrägung der Manipulierausnehmungsflächen 21.

Im Ausführungsbeispiel nach den Fig. 5 und 6 wird der Manipulierring 11 in dem ersten Manipulierringbereich 7 über ein erstes Zahnritzel 22 in Drehung versetzt, wobei das Zahnritzel zweckmäßigerweise mit einem nicht dargestellten Schneckengetriebe verbunden ist, welches mittels eines ebenfalls nicht dargestellten Skalenhandrades angetrieben wird. Im Ausführungsbeispiel nach Fig. 5 wird der Manipulierring 11 in dem zweiten Manipulierringbereich 9 unabhängig von dem Manipulierring 11 des ersten Manipulierringbereiches 7 über ein zweites Zahnritzel 23 in Drehung versetzt. Zweckmäßigerweise ist auch das zweite Zahnritzel 23 an ein nicht dargestelltes Schneckengetriebe angeschlossen, welches mit einem ebenfalls nicht dargestellten Skalenhandrad angetrieben wird. Bei dieser Ausführungsform werden der Manipulierring 11 des ersten Manipulierringbereiches 7 einerseits und der Manipulierring 11 des zweiten Manipulierringbereiches 9 andererseits unabhängig voneinander gedreht und dadurch findet auch eine jeweils unabhängige Änderung des Innendurchmessers D₂ bzw. D₃ statt. Fig. 6 zeigt im Übrigen die Stellung eines Manipulierringes 11, in der der kleinste Innendurchmesser des Basisteils 1 verwirklicht ist. Auch bei der Ausführungsform nach den Fig. 5 und 6 liegen die durch die Längsschlitze 5 getrennten Segmente der Basisteilwandung über die Manipulierzähne 17 gleichsam federnd an den Manipulierausnehmungen 20 des Manipulierringes 11 an.

## Patentansprüche

1. Kalibrierhülse für ein extrudiertes Kunststoffrohr, mit einem rohrförmigen Basisteil (1), mit einem Eintrittsende (2) und einem Austrittsende (3), wobei der Innendurchmesser des rohrförmigen Basisteils (1) veränderbar ist, **dadurch gekennzeichnet,**
**dass** das rohrförmige Basisteil (1) in seiner Basisteilwandung zumindest einen sich in Längsrichtung des Basisteils (1) erstreckenden Längsschlitz (5) aufweist,
**dass** eine erste Manipuliereinrichtung (6) vorgesehen ist, mit welcher in einem ersten Manipulierringbereich (7) durch Einwirkung auf die Außenoberfläche des Basisteils (1) der Innendurchmesser des Basisteils (1) veränderbar ist
und **dass** zumindest eine zweite Manipuliereinrichtung (8) vorgesehen ist, mit welcher in zumindest einem zweiten Manipulierringbereich (9) durch Einwirkung auf die Außenoberfläche des Basisteils (1) der Innendurchmesser des Basisteils (1) veränderbar ist.

2. Kalibrierhülse nach Anspruch 1, **dadurch gekennzeichnet, dass** der zumindest eine Längsschlitz (5) wellenförmig ausgebildet ist.

3. Kalibrierhülse nach einem Ansprüche 1 oder 2, **dadurch gekennzeichnet, dass** die Schlitzbreite des Längsschlitzes (5) im jungfräulichen Zustand des Basisteils (1) vom Eintrittsende (2) zum Austrittsende (3) hin zunimmt.

4. Kalibrierhülse nach einem der Ansprüche 1 bis 3, **dadurch gekennzeichnet, dass** im jungfräulichen Zustand des Basisteils (1) der Innendurchmesser des Basisteils (1) am Eintrittsende (2) geringer ist als am Austrittsende (3).

5. Kalibrierhülse nach einem der Ansprüche 1 bis 4, **dadurch gekennzeichnet, dass** im jungfräulichen Zustand des Basisteils (1) ein Innendurchmesser im bezüglich der Längserstreckung des Basisteils (1) mittleren Bereich (4) des Basisteils (1) geringer ist als der Innendurchmesser am Austrittsende (3).

6. Kalibrierhülse nach einem der Ansprüche 1 bis 5, **dadurch gekennzeichnet, dass** in zumindest einem Manipulierringbereich (7, 9) die Außenoberfläche des Basisteils (1) eine konusförmige Manipulieraußenfläche (10) aufweist.

7. Kalibrierhülse nach Anspruch 6, **dadurch gekennzeichnet, dass** in einem Manipulierringbereich (7, 9) ein das Basisteil (1) umfassender Manipulierring (11) mit einer konusförmigen Manipulierinnenfläche (12) angeordnet ist und dass durch Verschiebung des Manipulierringes (11) in Längsrichtung des Basisteils (1) und durch Wechselwirkung der konusförmigen Manipulieraußenfläche (10) mit der konusförmigen Manipulierinnenfläche (12) der Innendurchmesser des Basisteils (1) veränderbar ist.

8. Kalibrierhülse nach einem der Ansprüche 1 bis 7, **dadurch gekennzeichnet, dass** in zumindest einem Manipulierringbereich (7, 9) die Außenoberfläche des Basisteils (1) über den Außenumfang des Basisteils (1) verteilte und aus der Außenoberfläche vorkragende Manipulierzähne (17) aufweist und dass durch Einwirkung auf die Manipulierzähne (17) der Innendurchmesser des Basisteils (1) veränderbar ist.

9. Kalibrierhülse nach Anspruch 8, **dadurch gekennzeichnet, dass** die Manipulierzähne (17) in Umfangsrichtung des Basisteils (1) abgeschrägte Manipulierzahnflächen (18) aufweisen.

10. Kalibrierhülse nach einem der Ansprüche 8 oder 9, **dadurch gekennzeichnet, dass** in dem Manipulierringbereich (7, 9) ein das Basisteil umfassender Manipulierring (11) angeordnet ist und dass beim Drehen des Manipulierringes (11) durch Wechselwirkung der Innenumfangsfläche (19) des Manipulierringes (11) mit den Manipulierzähnen (17) der Innendurchmesser des Basisteils (1) veränderbar ist.

## Claims

1. A calibration sleeve for an extruded plastic pipe, with a tubular base section (1), with an inlet end (2) and an outlet end (3), wherein the inner diameter of the tubular base section (1) can be varied, **characterized in that**
the tubular base section (1) has at least one longitudinal slit (5) extending in the longitudinal direction of the base section (1) in its base section wall,
a first manipulation device (6) is provided, with which the inner diameter of the base section (1) can be varied in a first manipulation area (7) by influencing the outer surface of the base section (1), and that
at least one second manipulation device (8) is provided, with which the inner diameter of the base section (1) can be varied in at least one second manipulation area (9) by influencing the outer surface of the base section (1).

2. The calibration sleeve according to claim 1, **characterized in that** the at least one longitudinal slit (5) is undulating.

3. The calibration sleeve according to one of claims 1 or 2, **characterized in that** the slit width of the longitudinal slit (5) increases in the virgin state of the base section (1) from the inlet end (2) to the outlet end (3).

4. The calibration sleeve according to one of claims 1 to 3, **characterized in that** the inner diameter of the base section (1) at the inlet end (2) is less than at the outlet end (3) in the virgin state of the base section (1).

5. The calibration sleeve according to one of claims 1 to 4, **characterized in that** an inner diameter in the central area (4) of the base section (1) relative to the longitudinal extension of the base section 91) is less than the inner diameter at the outlet end (3) in the virgin state of the base section (1).

6. The calibration sleeve according to one of claims 1 to 5, **characterized in that** the outer surface of the base section (1) has a conical outer manipulation surface (10) in at least one manipulation ring area (7, 9).

7. The calibration sleeve according to claim 6, **characterized in that** a manipulation ring (11) with a conical inner manipulation surface (12) comprising the base section (1) is arranged in a manipulation area (7, 9), and that the inner diameter of the base section (1) can be varied by shifting the manipulation ring (11) in the longitudinal direction of the base section (1) and having the conical outer manipulation surface (10) interact with the conical inner manipulation surface (12).

8. The calibration sleeve according to one of claims 1 to 7, **characterized in that** the outer surface of the base section (1) has manipulation teeth (17) distributed over the outer periphery of the base section (1) and projecting out of the outer surface in at least one manipulation ring area (7, 9), and that the inner diameter of the base section (1) can be varied by influencing the manipulation teeth (17).

9. The calibration sleeve according to claim 8, **characterized in that** the manipulation teeth (17) have beveled manipulation tooth surfaces (18) in the circumferential direction of the base section (1).

10. The calibration sleeve according to one of claims 8 or 9, **characterized in that** a manipulation ring (11) encompassing the base section is situated in the manipulation area (7, 9), and that the inner diameter of the base section (1) can be varied while turning the manipulation ring (11) through the interaction of the inner circumferential surface (19) of the manipulation ring (11) with the manipulation teeth (17).

## Revendications

1. Manchon de calibrage pour tube extrudé en matière plastique, comportant une pièce de base de forme tubulaire (1), avec une extrémité d'entrée (2) et une extrémité de sortie (3), le diamètre intérieur de la pièce de base de forme tubulaire (1) étant modifiable, **caractérisé en ce**
**que** la pièce de base de forme tubulaire (1) présente dans sa paroi au moins une fente longitudinale (5) s'étendant dans le sens longitudinal de la pièce de base (1),
**qu'**est prévue une première installation de manipulation (6), grâce à laquelle le diamètre intérieur de la pièce de base (1) est modifiable dans une première zone à anneau de manipulation (7) en agissant sur la surface extérieure de la pièce de base (1)
et **qu'**est prévue au moins une deuxième installation de manipulation (8), grâce à laquelle le diamètre intérieur de la pièce de base (1) est modifiable dans au moins une seconde zone à anneau de manipulation (9) en agissant sur la surface extérieure de la pièce de base (1).

2. Manchon de calibrage selon la revendication 1, **caractérisé en ce que** la fente longitudinale (5) présente au moins une fois est configurée avec une forme ondulée.

3. Manchon de calibrage selon une revendication 1 ou 2, **caractérisé en ce que** la largeur de la fente longitudinale (5) augmente, en l'état vierge de la pièce de base (1), de l'extrémité d'entrée (2) en direction de l'extrémité de sortie (3).

4. Manchon de calibrage selon une des revendications 1 à 3, **caractérisé en ce que**, en l'état vierge de la pièce de base (1), le diamètre intérieur de la pièce de base (1) est plus petit à l'extrémité d'entrée (2) qu'à l'extrémité de sortie (3).

5. Manchon de calibrage selon une des revendications 1 à 4, **caractérisé en ce que**, en l'état vierge de la pièce de base (1), un diamètre intérieur de la pièce de base (1) dans la zone centrale (4) relativement à l'extension en longueur de la pièce de base (1) est plus petit que le diamètre intérieur à l'extrémité de sortie (3).

6. Manchon de calibrage selon une des revendications 1 à 5, **caractérisé en ce que** la surface extérieure de la pièce de base (1) présente dans au moins une zone à anneau de manipulation (7, 9) une surface extérieure de manipulation de forme conique (10).

7. Manchon de calibrage selon la revendication 6, **caractérisé en ce que** dans une zone à anneau de manipulation (7, 9) est disposé un anneau de manipulation (11) entourant la pièce de base (1) avec une surface intérieure de manipulation de forme conique (12) et que le diamètre intérieur de la pièce de base (1) est modifiable en décalant l'anneau de manipulation (11) dans le sens longitudinal de la pièce de base (1) et par interaction de la surface extérieure de manipulation de forme conique (10) avec la surface intérieure de manipulation de forme conique (12).

8. Manchon de calibrage selon une des revendications 1 à 7, **caractérisé en ce que**, dans au moins une zone à anneau de manipulation (7, 9), la surface extérieure de la pièce de base (1) présente des dents de manipulation (17) réparties sur la circonférence extérieure de la pièce de base (1) et dépassant de la surface extérieure et que le diamètre intérieur de la pièce de base (1) est modifiable par action sur les dents de manipulation (17).

9. Manchon de calibrage selon la revendication 8, **caractérisé en ce que** les dents de manipulation (17) présentent des surfaces (18) biseautées dans le sens circonférentiel de la pièce de base (1).

10. Manchon de calibrage selon la revendication 8, **caractérisé en ce que** qu'un anneau de manipulation (11) entourant la pièce de base (1) est disposé dans la zone à anneau de manipulation (7, 9) et que, lorsqu'on tourne l'anneau de manipulation (11), le diamètre de la pièce de base (1) est modifiable par interaction de la surface circonférentielle intérieure (19) de l'anneau de manipulation (11) avec les dents de manipulation (17).
